(19) Europäisches Patentamt
European Patent Office
Office européen des brevets

(11) **EP 3 543 284 B1**

(12) **EUROPEAN PATENT SPECIFICATION**

(45) Date of publication and mention
of the grant of the patent:
**15.03.2023 Bulletin 2023/11**

(21) Application number: **17871958.9**

(22) Date of filing: **16.11.2017**

(51) International Patent Classification (IPC):
*C08J 9/12* (2006.01)     *B29C 45/00* (2006.01)
*C08J 9/18* (2006.01)     *C08L 67/00* (2006.01)
*C08L 67/02* (2006.01)     *C08L 67/03* (2006.01)

(52) Cooperative Patent Classification (CPC):
(C-Sets available)
**C08J 9/18; B29C 45/00; C08G 63/605; C08J 9/12;
C08K 3/013; C08K 3/20;** C08J 2300/12;
C08J 2300/22                                    (Cont.)

(86) International application number:
**PCT/JP2017/041280**

(87) International publication number:
**WO 2018/092847 (24.05.2018 Gazette 2018/21)**

(54) **FOAM-MOLDING RESIN COMPOSITION, METHOD FOR PRODUCING FOAM-MOLDED BODY, AND FOAM-MOLDED BODY**

SCHAUMSTOFFFORMUNGSHARZZUSAMMENSETZUNG, VERFAHREN ZUR HERSTELLUNG EINES SCHAUMSTOFFGEFORMTEN KÖRPERS UND SCHAUMSTOFFGEFORMTER KÖRPER

COMPOSITION DE RÉSINE POUR MOULAGE DE MOUSSE, PROCÉDÉ DE FABRICATION D'ARTICLE MOULÉ EXPANSÉ, ET ARTICLE MOULÉ EXPANSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2016 JP 2016225037**

(43) Date of publication of application:
**25.09.2019 Bulletin 2019/39**

(73) Proprietor: **Sumitomo Chemical Company, Limited**
**Tokyo 103-6020 (JP)**

(72) Inventors:
• **SAKAI, Taiga**
  **Tsukuba-shi**
  **Ibaraki 300-3294 (JP)**
• **MAEDA, Mitsuo**
  **Tokyo 104-8260 (JP)**

(74) Representative: **Vossius & Partner Patentanwälte Rechtsanwälte mbB Siebertstrasse 3 81675 München (DE)**

(56) References cited:
JP-A- 2003 138 054     JP-A- 2003 138 054
JP-A- 2003 170 432     JP-A- 2013 185 044
JP-A- 2014 159 510     US-A1- 2006 264 580
US-A1- 2006 287 441     US-A1- 2007 275 242
US-A1- 2015 148 466

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/013, C08L 67/02;**
**C08K 3/20, C08L 67/02;**
**C08K 3/22, C08L 67/03;**
**C08K 3/34, C08L 67/02;**
**C08K 3/34, C08L 67/03;**
**C08L 67/03, C08L 67/03, C08K 3/34**

**Description**

[Technical Field]

The present invention relates to a resin composition, a method for producing a foamed molded article, a foamed molded article, and the use of the resin composition for producing a foamed molded article.
Priority is claimed on Japanese Patent Application No. 2016-225037, filed November 18, 2016.

[Background Art]

Conventionally, since plastics are lighter than metals, they are widely adopted in various application fields such as electrical and electronic components, automobile parts, miscellaneous goods and the like. In addition, as the demand for further weight reduction of plastics is increasing, a technique of using a chemical foaming agent and a technique of foaming a resin by heating or the like are known as techniques of lowering the specific gravity of a resin product.
In recent years, techniques of foam molding using a supercritical fluid as a foaming agent have been disclosed for the purpose of improving mechanical strength and surface roughness in addition to weight reduction (see Patent Documents 1 to 3).

[Citation List]

[Patent Documents]

[Patent Document 1] Japanese Unexamined Patent Application, First Publication No. Hei 10-175249

[Patent Document 2] Japanese Unexamined Patent Application, First Publication No. 2002-168279

[Patent Document 3] Japanese Unexamined Patent Application, First Publication No. 2004-269583

Moreover, JP 2013-185044 A discloses a method of manufacturing a foam molding, a resin composition, a foam, a heat insulating member, and a fluid holding member. The document discloses a foam molding made from a resin composition and a supercritical fluid which is nonreactive with the liquid crystal polyester contained in the resin composition in a supercritical state.

[Summary of Invention]

[Technical Problem]

However, in the above methods, there is a trade-off relationship between the weight reduction and the improvement of the mechanical strength of the obtained foamed molded article, and if one is given priority, the other may not be achieved. Accordingly, there is a demand for a resin composition for foam molding which can also maintain the mechanical strength while reducing the weight of the foamed molded article, a foamed molded article and a method for producing a foamed molded article.
The present invention has been made in view of the above circumstances, with an object of providing a resin composition for foam molding capable of molding a foamed molded article which is lightweight and excellent in mechanical strength, a foamed molded article, and a method for producing a foamed molded article.

[Solution to Problem]

In order to solve the above problems, one aspect of the present invention provides a resin composition as defined in the annexed claims which is suitable for use in foam molding using a supercritical fluid as a foaming agent, and is referred to herein also as resin composition for foam molding.
One aspect of the present invention provides a method for producing a foamed molded article, including a step of melt-kneading a mixture containing the above-mentioned resin composition for foam molding and a supercritical fluid, and a step of foam molding the mixture by lowering at least one of the pressure and the temperature of the melt-kneaded mixture to below the critical point of the supercritical fluid.
In one aspect of the present invention, the production method may be configured so that the supercritical fluid is nitrogen.

One aspect of the present invention provides a foamed molded article using the above-mentioned resin composition for foam molding as a molding material, wherein the foamed molded article contains a plurality of foam cells and has a weight reduction rate represented by a formula (S1) of 48% or more and 65% or less,

$$\text{weight reduction rate } (\%) = 100 \times (dB - dA) / dB \quad (S1)$$

(In the formula (S1), dB represents the true density (g/cm$^3$) of the resin composition for foam molding, and dA represents the apparent density (g/cm$^3$) of the foamed molded article.)

That is, the present invention includes the following aspects.

[1] A resin composition comprising a thermoplastic resin and an inorganic filler, wherein said thermoplastic resin is a liquid crystalline aromatic polyester having a repeating unit (1), a repeating unit (2) and a repeating unit (3):

(1)      $-O-Ar^1-CO-$

(2)      $-CO-Ar^2-CO-$

(3)      $-X-Ar^3-Y-$

(4)      $-Ar^4-Z-Ar^5-$

wherein, in the formulas, $Ar^1$ represents a phenylene group, a naphthylene group or a biphenylylene group; $Ar^2$ and $Ar^3$ each independently represent a phenylene group, a naphthylene group, a biphenylylene group or a group represented by the above formula (4); X and Y each independently represent an oxygen atom or an imino group (-NH-); $Ar^4$ and $Ar^5$ each independently represent a phenylene group or a naphthylene group; Z represents an oxygen atom, a sulfur atom, a carbonyl group, a sulfonyl group or an alkylidene group; and hydrogen atoms of $Ar^1$, $Ar^2$ or $Ar^3$ may each independently be substituted with a halogen atom, an alkyl group or an aryl group, wherein a water absorption rate of said inorganic filler in atmospheric air at a temperature of 25°C and a relative humidity of 50% is 0.05% by mass or more and 2.0% by mass or less, wherein said water absorption rate is a value obtained by a thermogravimetric analysis method for the inorganic filler which is placed under an environment at a temperature of 25°C and a relative humidity of 50% for a period of time which is equal to or longer than the time required for the amount of moisture contained in the inorganic filler to reach equilibrium, and the thermogravimetric analysis is carried out by raising the temperature from 25°C to 600°C at a temperature increase condition of 10°C/min using a thermogravimetric analyzer, and by calculating the water absorption rate based on formula (S2) from the mass ratio of the inorganic filler before and after the temperature increase:

$$\text{Water absorption rate } (\%) = \left\{1 - \frac{(mass\ of\ inorganic\ filler\ after\ temperature\ increase)}{(mass\ of\ inorganic\ filler\ before\ temperature\ increase)}\right\} \times 100 \quad (S2),$$

wherein said inorganic filler is at least one selected from the group consisting of titanium oxide, talc and mica, and wherein a content of the thermoplastic resin is 80 parts by mass or more and 99 parts by mass or less, and a content of said inorganic filler is 1 part by mass or more and 20 parts by mass or less, with respect to 100 parts by mass of said resin composition.

[Advantageous Effects of Invention]

According to one aspect of the present invention, there are provided a resin composition for foam molding capable of obtaining a foamed molded article which is lightweight and excellent in mechanical strength, a foamed molded article which is lightweight and excellent in mechanical strength, and a method for producing the aforementioned foamed molded article.

[Brief Description of Drawings]

FIG. 1 is a schematic view of an injection molding machine used for producing a foamed molded article according to one embodiment of the present invention.
FIG. 2 is a scatter diagram showing an elasticity retention rate of a foamed molded article with respect to a weight reduction rate of a foamed molded article according to one embodiment of the present invention.

[Description of Embodiments]

<Resin composition for foam molding>

A resin composition for foam molding according to one embodiment of the present invention includes a thermoplastic resin and an inorganic filler having a water absorption rate of 0.05% by mass or more and 2.0% by mass or less in atmospheric air at a temperature of 25°C and a relative humidity of 50%, and includes 1 part by mass or more and 20 parts by mass or less of the inorganic filler with respect to 100 parts by mass of the resin composition for foam molding.

[Thermoplastic resin]

The thermoplastic resin contained in the resin composition for foam molding of the present embodiment is a liquid crystalline aromatic polyester, because the liquid crystalline aromatic polyesters have excellent mechanical properties and thermal properties.
The content of the thermoplastic resin included in the resin composition for foam molding of the present embodiment is 80 parts by mass or more and 99 parts by mass or less, and preferably 90 parts by mass or more and 97 parts by mass or less, with respect to 100 parts by mass of the aforementioned resin composition for foam molding.
A liquid crystalline aromatic polyester used as the thermoplastic resin contained in the resin composition for foam molding of the present embodiment will be described. The liquid crystalline aromatic polyester is an aromatic polyester exhibiting optical anisotropy at the time of melting. The liquid crystalline aromatic polyester according to the present embodiment has a repeating unit represented by the following formula (1) (hereinafter sometimes referred to as "repeating unit (1)") , a repeating unit represented by the following formula (2) (hereinafter sometimes referred to as "repeating unit (2)") and a repeating unit represented by the following formula (3) (hereinafter sometimes referred to as "repeating unit (3)"):

$$(1) \qquad \text{-O-Ar}^1\text{-CO-}$$

$$(2) \qquad \text{-CO-Ar}^2\text{-CO-}$$

$$(3) \qquad \text{-X-Ar}^3\text{-Y-}$$

$$(4) \qquad \text{-Ar}^4\text{-Z-Ar}^5\text{-}$$

In the formulas, $Ar^1$ represent a phenylene group, a naphthylene group or a biphenylylene group; $Ar^2$ and $Ar^3$ each independently represent a phenylene group, a naphthylene group, a biphenylylene group or a group represented by the above formula (4); X and Y each independently represent an oxygen atom or an imino group (-NH-); $Ar^4$ and $Ar^5$ each independently represent a phenylene group or a naphthylene group; Z represents an oxygen atom, a sulfur atom, a carbonyl group, a sulfonyl group or an alkylidene group; and hydrogen atoms of $Ar^1$, $Ar^2$ or $Ar^3$ may each independently be substituted with a halogen atom, an alkyl group or an aryl group.
Examples of the halogen atom include a fluorine atom, a chlorine atom, a bromine atom and an iodine atom. The alkyl group is preferably an alkyl group having 1 to 10 carbon atoms, and examples thereof include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group and an n-decyl group. The aryl group is preferably an aryl group having 6 to 20 carbon atoms, and examples thereof include a phenyl group, an o-tolyl group, an m-tolyl group, a p-tolyl group, a 1-naphthyl group and a 2-naphthyl group. When the aforementioned hydrogen atom of $Ar^1$, $Ar^2$ or $Ar^3$ is substituted with any of these groups, the numbers of substituents in $Ar^1$, $Ar^2$ and $Ar^3$ are each independently 2 or less, and preferably 1 or less.
The alkylidene group represented by Z is preferably an alkylidene group having 1 to 10 carbon atoms, and examples thereof include a methylene group, an ethylidene group, an isopropylidene group, an n-butylidene group and a 2-ethylhexylidene group.

The repeating unit (1) is a repeating unit derived from an aromatic hydroxycarboxylic acid. As the repeating unit (1), a repeating unit derived from p-hydroxybenzoic acid (that is, $Ar^1$ is a p-phenylene group) or a repeating unit derived from 6-hydroxy-2-naphthoic acid (that is, $Ar^1$ is 2,6-naphthylene group) is preferable.

The repeating unit (2) is a repeating unit derived from an aromatic dicarboxylic acid. As the repeating unit (2), a repeating unit derived from terephthalic acid (that is, $Ar^2$ is a p-phenylene group), a repeating unit derived from isophthalic acid (that is, $Ar^2$ is an m-phenylene group), or a repeating unit derived from 2,6-naphthalenedicarboxylic acid (that is, $Ar^2$ is a 2,6-naphthylene group) is preferable.

The repeating unit (3) is a repeating unit derived from an aromatic diol, an aromatic hydroxylamine or an aromatic diamine. As the repeating unit (3), a repeating unit derived from hydroquinone, p-aminophenol or p-phenylenediamine (that is, $Ar^3$ is a p-phenylene group) or a repeating unit derived from 4,4'-dihydroxybiphenyl, 4-amino-4'-hydroxybiphenyl or 4,4'-diaminobiphenyl (that is, $Ar^3$ is 4,4'-biphenylylene group) is preferred.

It should be noted that in the present specification, the expression "derived" means that the chemical structure is changed due to polymerization of raw material monomers, while no other structural change occurs.

In the liquid crystalline aromatic polyester according to the present invention containing the repeating units (1), (2) and (3), with respect to amount (number of moles) of all the repeating units constituting the liquid crystalline aromatic polyester, the content of the repeating unit (1) is preferably 30 mol% or more, more preferably from 30 to 80 mol%, still more preferably from 40 to 70 mol%, and particularly preferably from 45 to 65 mol%; the content of the repeating unit (2) is preferably 35 mol% or less, more preferably from 10 to 35 mol%, still more preferably from 15 to 30 mol%, and particularly preferably from 17.5 to 27.5 mol%; and the content of the repeating unit (3) is preferably 35 mol% or less, more preferably from 10 to 35 mol%, still more preferably from 15 to 30 mol%, and particularly preferably from 17.5 to 27.5 mol%.

It should be noted that the total amount of the repeating units (1), (2) and (3) does not exceed 100 mol%.

The higher the content of the repeating unit (1), the more the melt fluidity, heat resistance and strength / rigidity of the liquid crystalline aromatic polyester tend to improve, but when it exceeds 80 mol%, the melting temperature and melt viscosity tend to be high, and the temperature required for molding tends to be high. The molar ratio of the content of the repeating unit (2) to the content of the repeating unit (3) is preferably from 0.9 / 1 to 1 / 0.9, more preferably from 0.95 / 1 to 1 / 0.95, and still more preferably from 0.98 / 1 to 1 / 0.98.

The liquid crystalline aromatic polyester according to the present invention may have two or more types of repeating units (1) to (3) each independently. The liquid crystalline aromatic polyester may have a repeating unit other than the repeating units (1) to (3), and the content thereof is 10 mol% or less, and preferably 5 mol% or less, with respect to the total amount (number of moles) of all the repeating units constituting the liquid crystalline aromatic polyester.

From the viewpoint of obtaining a liquid crystalline aromatic polyester having a low melt viscosity, it is preferable that each of X and Y in the repeating unit (3) is an oxygen atom (that is, it is a repeating unit derived from an aromatic diol), and a liquid crystalline aromatic polyester having a repeating unit in which each of X and Y is an oxygen atom as the only repeating unit (3) is more preferable.

The flow starting temperature of the liquid crystalline aromatic polyester according to the resin composition for foam molding of the present embodiment is preferably 280°C or higher, more preferably 290°C or higher, and still more preferably 295°C or higher, and at the same time, is preferably 380°C or less, and more preferably 350°C or less. That is, the flow starting temperature of the liquid crystalline aromatic polyester is preferably 280°C or more and 380°C or less, more preferably 290°C or more and 380°C or less, and still more preferably 295°C or more and 350°C or less.

The higher the flow starting temperature, the easier it is to improve heat resistance and water resistance. However, if it is too high, high temperature is required for melting, and thermal degradation tends to occur during molding, and the viscosity at the time of melting increases to lower the fluidity.

When the flow starting temperature is within the above range, the heat resistance and water resistance are easily improved, and it is possible to prevent the thermal degradation during molding and the increase in viscosity and decrease in fluidity during melting.

It should be noted that the "flow starting temperature" which is also referred to as flow temperature or fluidity temperature and serves as an indicator of the molecular weight of the liquid crystalline aromatic polyester, is a temperature at which a melt viscosity of 4,800 Pa·s (48,000 poise) is exhibited when using a capillary rheometer having a nozzle with an inner diameter of 1 mm and a length of 10 mm and extruding the heated melt of the liquid crystalline aromatic polyester from the nozzle at a rate of temperature increase of 4°C/min under a load of 9.8 MPa (for example, see "Liquid Crystalline Polymer - Synthesis, Molding, and Application -" edited by Naoyuki Koide, pp. 95-105, published by CMC Publishing Co., Ltd., published on June 5, 1987).

For the liquid crystalline aromatic polyester according to the resin composition for foam molding of the present embodiment, commercially available products may be used or those produced by a known method may be used.

As a method for producing the liquid crystalline aromatic polyester, for example, a method for producing a liquid crystalline aromatic polyester by polymerizing (polycondensing) an aromatic hydroxycarboxylic acid, an aromatic dicarboxylic acid, and at least one compound selected from the group consisting of an aromatic diol, an aromatic hydroxyamine and an aromatic diamine can be mentioned.

In addition, for example, a method for producing a liquid crystalline aromatic polyester by polymerizing one obtained by polymerizing a plurality of types of aromatic hydroxycarboxylic acids, an aromatic dicarboxylic acid, and at least one compound selected from the group consisting of an aromatic diol, an aromatic hydroxyamine and an aromatic diamine can be mentioned.

Furthermore, for example, a method for producing a liquid crystalline aromatic polyester by polymerizing a polyester such as polyethylene terephthalate and an aromatic hydroxycarboxylic acid can be mentioned.

The content of the repeating unit containing a 2,6-naphthylene group of the liquid crystalline aromatic polyester can be controlled, for example, by changing the charge ratio of monomers at the time of polycondensation.

It is possible to produce, for example, by adjusting a monomer that derives the repeating unit (1), that is, a predetermined aromatic hydroxycarboxylic acid; a monomer that derives the repeating unit (2), that is, a predetermined aromatic dicarboxylic acid; and a monomer that derives the repeating unit (3), that is, a predetermined aromatic diol, so that the total amount of monomers having a 2,6-naphthylene group, that is, the total amount of 6-hydroxy-2-naphthoic acid, 2,6-naphthalene dicarboxylic acid and 2,6-naphthalene diol is from 40 to 75 mol% with respect to the total amount (number of moles) of all the monomers, followed by polymerization (polycondensation).

At this time, the aromatic hydroxycarboxylic acid, the aromatic dicarboxylic acid and the aromatic diol may be each independently replaced partially or entirely and use instead a polymerizable derivative thereof.

Examples of the polymerizable derivative of a compound having a carboxyl group, such as an aromatic hydroxycarboxylic acid and an aromatic dicarboxylic acid, include those obtained by converting a carboxyl group into an alkoxycarbonyl group or an aryloxycarbonyl group, those obtained by converting a carboxyl group into a haloformyl group, and those obtained by converting a carboxyl group into an acyloxycarbonyl group.

Examples of the polymerizable derivative of a compound having a hydroxyl group, such as an aromatic hydroxycarboxylic acid and an aromatic diol, include those obtained by acylating a hydroxyl group and converting it to an acyloxyl group.

Further, the liquid crystalline aromatic polyester according to the present embodiment is preferably produced by melt polymerization of a raw material monomer corresponding to the constituting repeating unit and solid phase polymerization of the obtained polymer (prepolymer). As a result, a liquid crystalline aromatic polyester having high heat resistance, water resistance and strength can be produced with favorable operability.

Further, the melt polymerization may be carried out in the presence of a catalyst, and examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as N,N-dimethylaminopyridine and N-methylimidazole, and nitrogen-containing heterocyclic compounds are preferably used.

[Inorganic filler]

The resin composition for foam molding of the present embodiment includes an inorganic filler having a water absorption rate of 0.05% by mass or more and 2.0% by mass or less in atmospheric air at a temperature of 25°C and a relative humidity of 50%. The water absorption rate of the inorganic filler is preferably 0.05% by mass or more and 1.0% by mass or less, more preferably 0.05% by mass or more and 0.5% by mass or less, and particularly preferably 0.05% by mass or more and 0.4% by mass or less.

In the present embodiment, the term "water absorption rate" means a value obtained by a thermogravimetric analysis (hereinafter sometimes abbreviated as TGA) method for an inorganic filler. More specifically, the TGA method is carried out by raising the temperature from 25°C to 600°C at a temperature increase condition of 10°C/min using a thermogravimetric analyzer (TGA-50, manufactured by Shimadzu Corporation). From the mass ratio of the inorganic filler before and after the temperature increase, the water absorption rate can be obtained based on a formula (S2).

For the inorganic filler to be subjected to TGA, one which is placed under an environment at a temperature of 25°C and a relative humidity of 50% for a certain period of time is used. The certain period of time is not limited as long as it is equal to or longer than the time required for the amount of moisture contained in the inorganic filler to reach equilibrium.

[Equation 1]

$$\text{Water absorption rate } (\%) =$$

$$\left\{1 - \frac{(mass\ of\ inorganic\ filler\ after\ temperature\ increase)}{(mass\ of\ inorganic\ filler\ before\ temperature\ increase)}\right\} \times 100 \qquad (S2)$$

The inorganic filler contained in the resin composition for foam molding of the present embodiment has a property of being dispersed without being dissolved with respect to the heated and melted thermoplastic resin described above.

In the resin composition for foam molding of the present embodiment, by including the inorganic filler, vaporization of a foaming agent to be described later is promoted at numerous places in the thermoplastic resin, and a foamed molded article in which foamed cells are favorably dispersed can be formed. Further, at the time of molding, since the resin composition for foam molding contains an inorganic filler, improvements in the strength and rigidity (elastic modulus) can also be expected.

The water absorption rate of the inorganic filler is influenced by the material, particle diameter, specific surface area and the like of the inorganic filler. That is, by appropriately selecting the material, particle diameter, specific surface area and the like, an inorganic filler having a water absorption rate of 0.05% by mass or more and 2.0% by mass or less in atmospheric air at a temperature of 25°C and a relative humidity of 50% can be obtained.

The above-mentioned inorganic filler may be in a plate-like form, or, other than the plate-like form, may be in a spherical form or other particulate forms.

As the plate-like inorganic filler, a plate-like inorganic filler having an average particle diameter of preferably 10 $\mu$m or more and 50 $\mu$m or less, and more preferably 15 $\mu$m or more and 40 $\mu$m or less can be mentioned. Talc or mica are used as the plate-like inorganic filler. The mica may be muscovite, phlogopite, fluorophlogopite or tetrasilicon mica.

As the particulate inorganic filler, a particulate inorganic filler having an average particle diameter of preferably 0.1 $\mu$m or more and 50 $\mu$m or less can be mentioned.

As the particulate inorganic filler, titanium oxide is used.

In one aspect, the inorganic filler according to the present invention is preferably at least one selected from the group consisting of titanium oxide, talc and mica.

The content of the inorganic filler contained in the resin composition for foam molding of the present embodiment is 1 part by mass or more and 20 parts by mass or less with respect to 100 parts by mass of the resin composition for foam molding, and preferably may be 2 parts by mass or more and 18 parts by mass or less, 3 parts by mass or more and 17 parts by mass or less, or 3 parts by mass or more and 10 parts by mass or less.

The moisture content in the resin composition for foam molding of the present embodiment may be 10 ppm or more and 400 ppm or less, or may be 15 ppm or more and 150 ppm or less with respect to the total mass of the resin composition for foam molding. When the moisture content of the resin composition for foam molding is within the above range, it is possible to incorporate the supercritical fluid as a foaming agent in a favorably dispersed state in the resin composition for foam molding, and foaming can be uniformly carried out. When the moisture content exceeds 400 ppm, decomposition of the thermoplastic resin contained in the resin composition for foam molding tends to occur, and as a result, the mechanical strength and heat resistance of the obtained foamed molded article may decrease.

By drying a thermoplastic resin at 150°C for 5 hours or more, the "moisture content of the resin composition for foam molding" can be calculated from the difference in mass measured for the thermoplastic resin before and after drying.

[Other components]

The resin composition for foam molding of the present embodiment may further contain at least one additive in addition to the above-mentioned thermoplastic resin and the inorganic filler as long as the effects of the present invention are not impaired. That is, the resin composition for foam molding of the present embodiment includes, as one aspect, the above-described thermoplastic resin, the above-described inorganic filler, and an additive.

For example, as the additive, mold release agents such as fluororesins and metal soaps, pigments such as titanium oxide, colorants such as dyes, antioxidants, thermal stabilizers, ultraviolet absorbers, antistatic agents, surfactants and the like may be added as a component. The content of these additives is preferably 0.01 parts by mass or more and 5 parts by mass or less with respect to 100 parts by mass of the resin composition for foam molding.

<Method for producing foamed molded article>

A method for producing a foamed molded article according to one embodiment of the present invention includes a step of melt-kneading a mixture containing the above-described resin composition for foam molding and a supercritical fluid, and a step of foam molding the aforementioned mixture by lowering at least one of the pressure and the temperature of the aforementioned mixture to below the critical point of the aforementioned supercritical fluid.

It is preferable to melt-knead and pelletize the above-described resin composition for foam molding in advance by an extruder in order to facilitate handling in the method for producing a foamed molded article to be described later. By melt-kneading in advance, the inorganic filler can be uniformly dispersed in the resin composition for foam molding.

As the extruder, an extruder having a cylinder, at least one screw disposed in the cylinder, and at least one supply port provided in the cylinder is preferable, and an extruder further having at least one vent portion provided in the cylinder is more preferable.

The supercritical fluid acts as a foaming agent for foaming the resin composition for foam molding. The supercritical fluid has no reactivity with the resin composition for foam molding and is preferably a gas under normal temperature and normal pressure (for example, temperature: 23°C, atmospheric pressure).

Here, the term "supercritical fluid" indicates a state of a substance, neither a gas, nor a liquid, nor a solid, which a substance exhibits under conditions of a specific temperature and pressure (critical point) or higher. The critical point which has a specific temperature and pressure is determined by the type of the substance.

It should be noted that in this specification, the term "supercritical fluid" means a substance (source gas to be described later) showing the properties of the supercritical fluid described above. That is, the supercritical fluid in the present specification means a substance showing intermediate properties between the gaseous state and the liquid state, having a penetrating power (dissolving power) into the molten resin which is also stronger than that in the liquid state, and having a property capable of being dispersed uniformly in the molten resin.

In addition, as one aspect, the term "supercritical fluid" means a substance placed under conditions of a specific temperature or pressure (critical point) or higher.

As the supercritical fluid according to the present embodiment, for example, an inert gas such as carbon dioxide, nitrogen and helium, air, oxygen, hydrogen or the like can be used. Among these examples, since nitrogen has a critical point at a temperature of -147°C and a pressure of 3.4 MPa, the normal temperature (25°C) is equal to or higher than the critical temperature. Therefore, since it is possible to prepare a supercritical fluid merely by controlling pressure, handling is easy, which is particularly preferable.

In the case of obtaining a foamed molded article by molding, at the same time as foaming, the resin composition for foam molding according to one embodiment of the present invention, a melt molding method is preferable as a method for producing the foamed molded article. Examples of the melt molding method include an injection molding method, an extrusion molding method such as a T-die method and an inflation method, a blow molding method, a vacuum molding method and a press molding method. Among them, the extrusion molding method and the injection molding method are preferable, and the injection molding method is more preferable. Hereinafter, a method for producing a foamed molded article by injection molding will be described.

The amount of the supercritical fluid used is preferably 0.01 parts by mass or more and 10 parts by mass or less with respect to 100 parts by mass of the resin composition for foam molding. When the amount of the supercritical fluid used is 0.01 parts by mass or more, further sufficient weight reduction effects are observed by foaming, and when it is 10 parts by mass or less, more sufficient mechanical strength tends to be obtained.

[Melt-kneading]

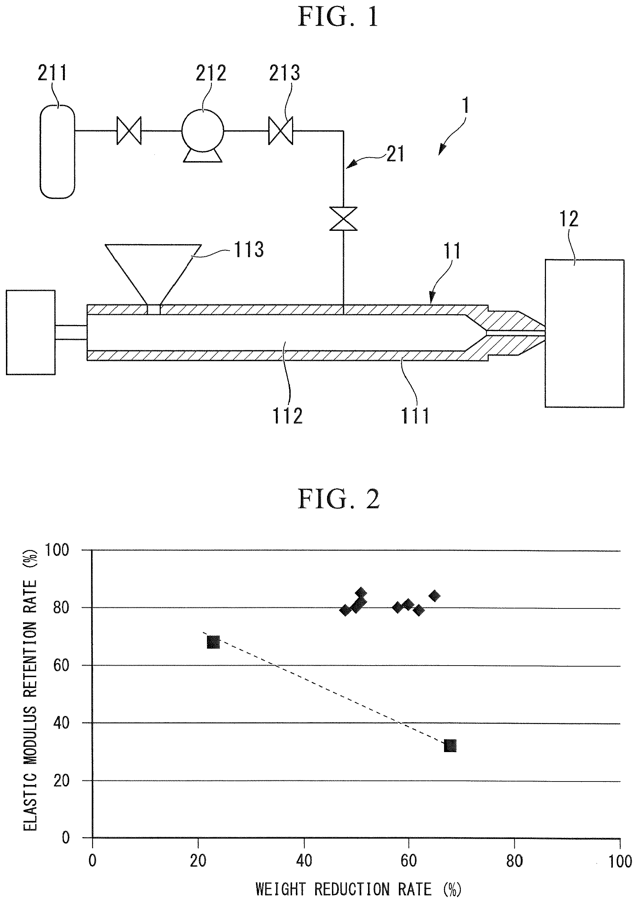

FIG. 1 is a schematic view of an injection molding machine used for producing a foamed molded article of the present embodiment.

This injection molding machine 1 is a machine for producing a foamed molded article having a predetermined shape by using the above-mentioned resin composition for foam molding and a supercritical fluid, and includes a main body 11, a mold 12, and a supercritical fluid introduction device 21 for introducing the supercritical fluid constituting a foaming agent into the main body 11.

The introduction device 21 includes a gas cylinder 211 filled with a source gas of the above-described supercritical fluid, a booster 212 for raising the pressure of the source gas from the gas cylinder 211 to a critical pressure, and a control valve 213 for controlling the amount of the source gas pressurized to a critical pressure (supercritical fluid) introduced into a cylinder 111. The source gas is heated by adiabatically compressing the source gas in the booster 212, but when the temperature reached is lower than the critical temperature, if necessary, a temperature raising device that increases the temperature of the source gas from the gas cylinder 211 to the critical temperature is used.

Next, a method for producing a foamed molded article using this injection molding machine 1 will be described.

First, the above-described resin composition for foam molding is introduced from a hopper 113 into the cylinder 111 and heated and kneaded in the cylinder 111 to melt the resin composition for foam molding. On the other hand, the gas cylinder 211 is opened, and the pressure and the temperature of the source gas is increased to the critical point or higher by the booster 212. The obtained supercritical fluid is introduced into the cylinder 111 by opening the control valve 213 and impregnated into the melted resin composition for foam molding, and the mixture of the resin composition for foam molding and the supercritical fluid is melted and kneaded. At this time, the temperature and pressure inside the cylinder is set to at least the critical point of the substance related to the supercritical fluid.

[Foam molding]

A mixture of the melt-kneaded resin composition for foam molding and the supercritical fluid (hereinafter sometimes referred to as molten resin) described above is moved by a screw 112 and injected into the mold 12 from inside the cylinder 111. At this time, until the injection of the molten resin into the mold 12 is completed, in order to maintain the supercritical state of the supercritical fluid contained in the molten resin, the mold 12 is clamped and a counter pressure may also be applied.

The temperature of the molten resin containing the supercritical fluid in the cylinder 111 decreases in the process of being injected into and maintained in the mold 12 whose temperature is adjusted to the desired temperature with a heater or the like from the inside of the cylinder 111 by the screw 112. Furthermore, the pressure which was equal to or higher than the critical pressure approaches the normal pressure, and the source gas in the supercritical state changes into the gaseous state. That is, the source gas in the supercritical state which is dispersed in the molten resin changes from the supercritical state to a gas, whereby the volume expands and a foamed molded article is obtained. Then, after cooling and solidifying the resin in the mold 12, the molded product is taken out of the mold 12 after a predetermined cooling time has elapsed. By the above operation, it is possible to obtain a foamed molded article by injection molding.

In the method for producing a foamed molded article according to one embodiment of the present invention, it is possible to suitably produce a thin foamed molded article having a thickness of 1.5 mm or more and 10 mm or less.

It should be noted that an average of values measured at a plurality of places of the foamed molded article by a micrometer or the like is taken as the "thickness".

[Foamed molded article]

In the present embodiment, the weight reduction rate of the foamed molded article is 48% or more and 65% or less.
When the weight reduction rate is within the above range, it is possible to obtain a foamed molded article superior in the balance between weight reduction and mechanical strength as compared with a foamed molded article produced by a conventional method.

In the present embodiment, the "weight reduction rate" means a value obtained based on a formula (S1).

$$\text{Weight reduction rate (\%)} = 100 \times (dB - dA) / dB \ (S1)$$

(In the formula (S1), dB represents the true density (g/cm$^3$) of the resin composition for foam molding, and dA represents the apparent density (g/cm$^3$) of the foamed molded article.)

The true density of the resin composition for foam molding can be obtained by a method described in "measurement of true density of resin composition for foam molding" in Examples described later.

The apparent density of the foamed molded article can be obtained by a method described in "measurement of apparent density of foamed molded article" in Examples described later.

In the present embodiment, by changing the amount of the supercritical fluid used, it is possible to control the weight reduction rate of the obtained foamed molded article within the above-mentioned range. In addition, it is also possible to control the weight reduction rate of the obtained foamed molded article by the type of the supercritical fluid.

Further, the obtained foamed molded article may be subsequently subjected to molding processing (secondary processing), or may be molded at the same time as foaming to obtain a foamed molded article. Since it is possible to obtain a molded article with high productivity, it is more preferable to obtain a foamed molded article by molding and foaming simultaneously.

According to the present invention there are provided a resin composition for foam molding capable of molding a foamed molded article which is lightweight and excellent in mechanical strength, and a method for producing a foamed molded article.

The foamed molded article of the present invention can be generally applied to any application to which liquid crystalline aromatic polyesters can be applied. For example, in the field of automobiles, as injection molded articles for automotive interior materials, injection molded articles for ceiling materials, injection molded articles for wheelhouse covers, injection molded articles for trunk room linings, injection molded articles for instrument panel skin materials, injection molded articles for handle covers, injection molded articles for armrests, injection molded articles for headrests, injection molded articles for seat belt covers, injection molded articles for shift lever boots, injection molded articles for console boxes, injection molded articles for horn pads, injection molded articles for knobs, injection molded articles for airbag covers, injection molded articles for various trims, injection molded articles for various pillars, injection molded articles for door lock bezels, injection molded articles for glove boxes, injection molded articles for defroster nozzles, injection molded articles for scuff plates, injection molded articles for steering wheels, injection molded articles for steering column covers and the like can be mentioned. Examples of injection molded articles for automotive exterior materials include injection molded articles for bumpers, injection molded articles for spoilers, injection molded articles for mud guards, and injection molded articles for side moldings. Examples of other injection molded articles for automobile parts include injection molded articles for automotive headlamps, injection molded articles for glass run channels, injection molded articles for weather strips, injection molded articles for drain hoses, injection molded articles for hoses such as injection molded articles for window washer tubes, injection molded articles for tubes, injection molded articles for rack and pinion boots and injection molded articles for gaskets. More specifically, EGI tubes, armrest inserts, armrest guides, armrest bases, outer door handles, ash tray panels, ash tray lamp housings, upper garnish, antenna inner tubes, ignition coil cases, ignition coil bobbins, inside door lock knobs, instrument panel cores, intercooler tanks, inner lock knobs, window glass sliders, window pivots, window moldings, window regulator handles, window regulator handle knobs, water pump impellers, washer nozzles, washer motor housings, air spoilers, air ducts, air duct intakes, air ventilation fins, air conditioning actuators, air control valves, air conditioning magnetic clutch bobbins, air conditioning control knobs, air flow meter housings, air regulators, extract grilles, emblems, oil cleaner cases, oil level gauges, oil brake valves, gasoline chambers, gasoline floats, gasoline injection nozzles, canisters, carburetors, carburetor valves, cooler sirocco fans, air conditioner vacuum pumps, cooling fans, clutch oil reservoirs, glove door outers, glove boxes, glove box knobs, glove box lids, condenser casings, compressor valves, commutators, circuit boards, surge tanks, thermostat housings, side brake wire protectors, side mirror stays, side mirror housings, side moldings, side louvers, silencers, silent gears, sun visor shafts, sun visor brackets, sun visor holders, sunroof frames, seat belt through anchors, seat belt tongue plates, seat belt buckles, seat belt retractor gears, generator covers, generator coil bobbins, generator bushes, shift arm coatings, shift lever knobs, junction boxes, cylinder head covers, switches, switch bases, starter interval gears, starter coil bobbins, starter levers, steering column covers, steering ball joints, steering horn pads, speed sensors, speedometer controls, speedometer driven gears, spoilers, thrust washers, sleeve bearings, center clusters, solenoid valves, timing belt covers, change lever covers, distributor caps, distributor point bushes, distributor insulated terminals, tailgates, doors, door side moldings, door trims, door latch covers, trunk rear aprons, trunk lower back finishers, transmission covers, transmission cases, transmission bushes, torque converter thrust washers, vacuum controllers, back horn housings, hatchback slide brackets, balance shaft gears, power window switch board cases, power seat gear housings, power steering tanks, bumpers, bumper clips, bumper moldings, heater core tanks, heater valves, piston valves, fuse boxes, pillar garnishes, pillar louvers, fenders, fuel injectors, fuel injector connectors, fuel injector nozzle covers, fuel strainers, fuel sedimenter cases, fuel check valves, fuel filler caps, fuel filter housings, fuel lids, brush holders, brake oil floats, brake oil reservoirs, brake reservoir caps, front end bumpers, front fenders, headrest guides, helical gears, wheel cap centers, wheel center hub caps, wheel full caps, bonnet clips, bonnet hood loopers, master cylinder pistons, meter connectors, meter panels, meter hoods, motor gears, molding clips, license plates, license plate pockets, radiator grilles, radiator tanks, lamp sockets, lamp reflectors, rear shelves, rear end bumpers, rear shelf sides, lid outers, lid clusters, lid clusters, retractable headlamp covers, relay cases, relay terminal base case coil bobbins, roof side rail garnishes, roof rails, room mirror stays, regulator cases, regulator handles, resonators, wiper arm heads, wiper arm head covers, wiper motor insulators, wiper levers, wire harness connectors, safety belt mechanism parts, rotation sensors, various switch boards, band clips for electrical wiring, electric mirror bases, interior clips, exhaust gas valves, exhaust gas pump side seals, and the like can be mentioned.

In addition, sensors, LED lamps, connectors, sockets, resistors, relay cases, switches, coil bobbins, capacitors, variable capacitor cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer related parts, microwave oven parts, acoustic and audio equipment parts, lighting parts, air conditioner parts, office computer related parts, telephone/facsimile related parts, copying machine related parts and the like can be mentioned.

Another preferred aspect of the present invention is

the resin composition for foam molding which is a resin composition for foam molding used for foam molding using a supercritical fluid as a foaming agent,

the aforementioned resin composition for foam molding includes a thermoplastic resin, an inorganic filler, and if required, an additive,

the aforementioned thermoplastic resin is a liquid crystalline aromatic polyester including at least one repeating unit (1) selected from the group consisting of a repeating unit in which $Ar^1$ is a 2,6-naphthylene group and a repeating unit in which $Ar^1$ is a phenylene group,

at least one repeating unit (2) selected from the group consisting of a repeating unit in which $Ar^2$ is a 2,6-naphthylene group, a repeating unit in which $Ar^2$ is a 1,4-phenylene group and a repeating unit in which $Ar^2$ is a 1,3-phenylene group, and

at least one repeating unit (3) selected from the group consisting of a repeating unit in which $Ar^3$ is a 1,4-phenylene group and a repeating unit in which $Ar^3$ is a biphenyl group, and

in which the content of the aforementioned repeating unit (1) is from 55 to 72 mol%, the content of the aforementioned repeating unit (2) is from 20 to 24 mol%, the content of the aforementioned repeating unit (3) is from 4 to 22.5 mol%, and the total amount of the aforementioned repeating unit (1), the aforementioned repeating unit (2) and the aforementioned repeating unit (3) does not exceed 100 mol%, with respect to 100 mol% of the total amount of all the repeating units;

the aforementioned inorganic filler is,

at least one selected from the group consisting of titanium oxide, talc and mica;

a water absorption rate of the aforementioned inorganic filler in atmospheric air at a temperature of 25°C and a relative humidity of 50% is 0.05% or more and 2.0% or less,

preferably 0.05% or more and 1.0% or less, more preferably 0.05% or more and 0.5% or less, and particularly preferably 0.05% or more and 0.4% or less;

the content of the aforementioned thermoplastic resin with respect to 100 parts by mass of the aforementioned resin composition for foam molding is from 80 to 99,

preferably 90 parts by mass or more and 97 parts by mass or less;

the content of the aforementioned inorganic filler with respect to 100 parts by mass of the aforementioned resin composition for foam molding is 1 part by mass or more and 20 parts by mass or less,

preferably 2 parts by mass or more and 18 parts by mass or less, still more preferably 3 parts by mass or more and 17 parts by mass or less, and

particularly preferably 3 parts by mass or more and 10 parts by mass or less; and

the moisture content in the aforementioned resin composition for foam molding is 10 ppm or more and 400 ppm or less, and preferably 15 ppm or more and 150 ppm or less.

Furthermore, the aforementioned resin composition for foam molding may have a weight reduction rate of 48 to 65% and an elastic modulus retention rate of 79 to 85%.

Yet another aspect of the present invention is

a method for producing a foamed molded article, including a step of melt-kneading a mixture containing the above resin composition for foam molding and a supercritical fluid, and

a step of foam molding the aforementioned mixture by lowering at least one of a pressure and a temperature of the aforementioned melt-kneaded mixture to below the critical point of the aforementioned supercritical fluid;

wherein the aforementioned supercritical fluid is carbon dioxide, nitrogen, helium, air, oxygen or hydrogen, and is preferably nitrogen.

Yet another aspect of the present invention is

a foamed molded article including the above resin composition for foam molding as a molding material,

wherein the aforementioned foamed molded article contains a plurality of foam cells, and

a weight reduction rate represented by the aforementioned formula (S1) is 48% or more and 65% or less.

[Examples]

The present invention will be described below based on Examples. However, the present invention is not limited to these Examples. It should be noted that in the present example, a liquid crystalline aromatic polyester was used as an example of the thermoplastic resin.

[Measurement of water absorption rate of inorganic filler]

The water absorption rate of the inorganic filler was determined by a thermogravimetric analysis (TGA) method. More specifically, it was obtained from the mass ratio of the inorganic filler before and after the temperature increase based on a formula (S2), when the temperature was raised from room temperature to 600°C at a temperature increase condition of 10°C/min, by using a thermogravimetric analyzer (TGA-50, manufactured by Shimadzu Corporation).

[Equation 2]

$$\text{Water absorption rate } (\%) = \left\{ 1 - \frac{(\text{mass of inorganic filler after temperature increase})}{(\text{mass of inorganic filler before temperature increase})} \right\} \times 100 \qquad (S2)$$

[Measurement of moisture content of resin composition for foam molding]

By drying a thermoplastic resin at 150°C for 5 hours or longer, the moisture content of the resin composition for foam molding was calculated from the water absorption rate of the inorganic filler measured by the above method, the content of the inorganic filler, and the mass measured for the thermoplastic resin after drying. It should be noted that the moisture content of the thermoplastic resin after drying was 0%.

[Measurement of true density of resin composition for foam molding]

The true density of the resin composition for foam molding was calculated from the mass measured for a standard sample after drying the standard sample at 150°C for 5 hours or more, and the volume obtained from the measured value of the dimension. A method for producing the standard sample will be described later.

[Measurement of apparent density of foamed molded article]

The apparent density of the foamed molded article was calculated from the mass measured for the foamed molded article after drying the foamed molded article at 150°C for 5 hours or more, and the volume obtained from the measured value of the dimension.

[Measurement of weight reduction rate of foamed molded article]

For the weight reduction rate of the foamed molded article, a value obtained based on a formula (S1) was adopted.

$$\text{Weight reduction rate } (\%) = 100 \times (dB - dA) / dB \text{ (S1)}$$

(In the formula (S 1), dB represents the true density (g/cm$^3$) of the resin composition for foam molding, and dA represents the apparent density (g/cm$^3$) of the foamed molded article.)

[Calculation of flexural strength and flexural modulus]

The flexural strength and the flexural modulus of the foamed molded article were obtained by a three-point bending test. A test piece having a width of 13 mm, a length of 125 mm and a thickness of 3 mm was cut out from the obtained foamed molded article, and a value obtained for this test piece when the test was conducted under measurement conditions of a distance between spans of 50 mm and a test speed of 1 mm/min using a universal testing machine (Tensilon RTG-1250, manufactured by A & D Co., Ltd.) was adopted.
The flexural strength and the flexural modulus of the standard sample were measured in the same manner as those of the foamed molded article.

[Measurement of elastic modulus retention rate of foamed molded article]

For the elastic modulus retention rate of the foamed molded article, a value representing the ratio of the flexural modulus of the foamed molded article to the flexural modulus of the standard sample in percentage was adopted.

<Production Example 1 (Production of liquid crystalline aromatic polyester A)>

1,034.99 g (5.5 mol) of 6-hydroxy-2-naphthoic acid, 378.33 g (1.75 mol) of 2,6-naphthalenedicarboxilic acid, 83.07 g (0.5 mol) of terephthalic acid, 272.52 g (2.475 mol: 0.225 mol in excess with respect to the total amount of 2,6-naphthalenedicarboxylic acid and terephthalic acid) of hydroquinone, 1,226.87 g (12 mol) of acetic anhydride and 0.17 g of 1-methylimidazole as a catalyst were charged into a reactor equipped with a stirrer, a torque meter, a nitrogen gas inlet tube, a thermometer and a reflux condenser. After replacing the gas in the reactor with nitrogen gas, the temperature was raised from room temperature (23°C) to 145°C over 15 minutes while stirring in a nitrogen gas stream to reflux at 145°C for 1 hour. Subsequently, the temperature was raised from 145°C to 310°C over 3 hours and 30 minutes while distilling off acetic acid produced as a byproduct and unreacted acetic anhydride, and the temperature was maintained at 310°C for 3 hours. Then, the reaction was terminated at a time point where an increase in torque was observed, and a solid reaction mixture (hereinafter sometimes referred to as prepolymer) was taken out and cooled to room temperature.
The prepolymer was pulverized to a particle diameter of about 0.1 to 1 mm with a pulverizer. The pulverized material was subjected to solid phase polymerization by raising the temperature from room temperature to 250°C over 1 hour in a nitrogen atmosphere, raising the temperature from 250°C to 320°C over 10 hours and maintaining the temperature at 320°C for 5 hours. The material obtained by solid phase polymerization was cooled to obtain a liquid crystalline aromatic polyester A in the form of a powder.

The liquid crystalline aromatic polyester A had 55 mol% of a repeating unit (1) in which $Ar^1$ was a 2,6-naphthylene group, 17.5 mol% of a repeating unit (2) in which $Ar^2$ was a 2,6-naphthylene group, 5 mol% of a repeating unit (2) in which $Ar^2$ was a 1,4-phenylene group and 22.5 mol% of a repeating unit (3) in which $Ar^3$ was a 1,4-phenylene group, with respect to 100 mol% of the total amount of all the repeating units.

<Production Example 2 (Production of liquid crystalline aromatic polyester B)>

The pulverized prepolymer (pulverized material) was subjected to solid phase polymerization in the same manner as in Production Example 1 except that, after raising the temperature from room temperature to 250°C over 1 hour in a nitrogen atmosphere, the temperature was raised from 250°C to 310°C over 10 hours and the temperature was maintained at 310°C for 5 hours. The material obtained by solid phase polymerization was cooled to obtain a liquid crystalline aromatic polyester B in the form of a powder.

The liquid crystalline aromatic polyester B had 55 mol% of a repeating unit (1) in which $Ar^1$ was a 2,6-naphthylene group, 17.5 mol% of a repeating unit (2) in which $Ar^2$ was a 2,6-naphthylene group, 5 mol% of a repeating unit (2) in which $Ar^2$ was a 1,4-phenylene group and 22.5 mol% of a repeating unit (3) in which $Ar^2$ was a 1,4-phenylene group, with respect to 100 mol% of the total amount of all the repeating units.

<Production Example 3 (Production of liquid crystalline aromatic polyester C)>

994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1,347.6 g (13.2 mol) of acetic anhydride were charged into a reactor equipped with a stirrer, a torque meter, a nitrogen gas inlet tube, a thermometer and a reflux condenser. After sufficiently replacing the inside of the reactor with nitrogen gas, 0.18 g of 1-methylimidazole was added, and the temperature was raised to 150°C over 30 minutes in a nitrogen gas stream and then maintained at 150°C to reflux for 30 minutes. Thereafter, 2.4 g of 1-methylimidazole was added, and then the temperature was raised to 320°C over 2 hours and 50 minutes while distilling off acetic acid produced as a byproduct and unreacted acetic anhydride. Then, the reaction was terminated at a time point where an increase in torque was observed, and a solid reaction mixture (prepolymer) was taken out.

The obtained prepolymer was cooled to room temperature and pulverized to a particle diameter of about 0.1 to 1 mm by a coarse grinder. The pulverized material was subjected to solid phase polymerization by raising the temperature from room temperature to 250°C over 1 hour in a nitrogen atmosphere, raising the temperature from 250°C to 295°C over 5 hours and maintaining the temperature at 295°C for 3 hours. The material obtained by solid phase polymerization was cooled to obtain a liquid crystalline aromatic polyester C in the form of a powder.

The liquid crystalline aromatic polyester C had 72 mol% of a repeating unit (1) in which $Ar^1$ was a phenylene group, 18 mol% of a repeating unit (2) in which $Ar^2$ was a 1,4-phenylene group, 6 mol% of a repeating unit (2) in which $Ar^2$ was a 1,3-phenylene group and 4 mol% of a repeating unit (3) in which $Ar^3$ was a biphenyl group, with respect to 100 mol% of the total amount of all the repeating units.

<Production Example 4 (Production of liquid crystalline aromatic polyester D)>

994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1,347.6 g (13.2 mol) of acetic anhydride were charged into a reactor equipped with a stirrer, a torque meter, a nitrogen gas inlet tube, a thermometer and a reflux condenser. After sufficiently replacing the inside of the reactor with nitrogen gas, 0.18 g of 1-methylimidazole was added, and the temperature was raised to 150°C over 30 minutes in a nitrogen gas stream and then maintained at 150°C to reflux for 30 minutes. Thereafter, 2.4 g of 1-methylimidazole was added, and then the temperature was raised to 320°C over 2 hours and 50 minutes while distilling off acetic acid produced as a byproduct and unreacted acetic anhydride. Then, the reaction was terminated at a time point where an increase in torque was observed, and a solid reaction mixture (prepolymer) was taken out.

The obtained prepolymer was cooled to room temperature and pulverized to a particle diameter of about 0.1 to 1 mm by a coarse grinder. The pulverized material was subjected to solid phase polymerization by raising the temperature from room temperature to 220°C over 1 hour in a nitrogen atmosphere, raising the temperature from 220°C to 240°C over 0.5 hours and maintaining the temperature at 240°C for 10 hours. The material obtained by solid phase polymerization was cooled to obtain a liquid crystalline aromatic polyester D in the form of a powder.

The liquid crystalline aromatic polyester D had 72 mol% of a repeating unit (1) in which $Ar^1$ was a phenylene group, 14.4 mol% of a repeating unit (2) in which $Ar^2$ was a 1,4-phenylene group, 9.6 mol% of a repeating unit (2) in which $Ar^2$ was a 1,3-phenylene group and 4 mol% of a repeating unit (3) in which $Ar^3$ was a biphenyl group, with respect to 100 mol% of the total amount of all the repeating units.

<Example 1>

97 parts by mass of the powder of the liquid crystalline aromatic polyester A and 3 parts by mass of titanium oxide "CR-60" (average particle diameter ...) manufactured by Ishihara Sangyo Kaisha, Ltd.) were mixed, and melted and kneaded by using a twin screw extruder "PCM-30" manufactured by Ikegai Corp., thereby producing a pellet composed of a resin composition for foam molding. The moisture content of the resin composition for foam molding calculated by the above method was 42 ppm. It should be noted that the powder of the liquid crystalline aromatic polyester A used was dried at 150°C for 5 hours or longer.

As the melt-kneading conditions at this time, the cylinder preset temperature of the twin screw extruder was 340°C and the screw rotation speed was 150 rpm. The cylinder preset temperature referred to here means the average value of the set temperature of a heating device provided between from the most downstream portion of the cylinder to a portion of about 2/3 of the cylinder length.

A molded article having a flat plate shape (250 mm × 360 mm × 3 mmt) was produced as a standard sample by melt molding without foaming the pellet composed of the resin composition for foam molding. It should be noted that in the present example, the weight reduction rate (%) of the standard sample was set to 0 and the elastic modulus retention rate (%) of the standard sample was set to 100.

In addition, a foamed molded article having a flat plate shape (250 mm × 360 mm × 3 mmt) was produced from the pellet composed of the resin composition for foam molding, using an all-electric molding machine "J450AD" manufactured by The Japan Steel Works, LTD. and a supercritical fluid production unit "SCF SYSTEM" manufactured by Trexel, Inc. At this time, when heating / weighing the resin in a cylinder at a preset temperature of 360°C, nitrogen in a supercritical state was introduced and injected into a mold at a preset temperature of 120°C, whereby nitrogen in a supercritical state became a gas in the mold.

<Example 2>

A standard sample and a foamed molded article of Example 2 were produced in the same manner as in Example 1 except that 97 parts by mass of the powder of the liquid crystalline aromatic polyester A and 3 parts by mass of talc "X-50" manufactured by Nippon Talc Co., Ltd. were mixed. The moisture content of the resin composition for foam molding calculated by the above method was 15 ppm. It should be noted that the powder of the liquid crystalline aromatic polyester A used was dried at 150°C for 5 hours or longer.

<Example 3>

A standard sample and a foamed molded article of Example 3 were produced in the same manner as in Example 1 except that 97 parts by mass of the powder of the liquid crystalline aromatic polyester B and 3 parts by mass of talc "X-50" manufactured by Nippon Talc Co., Ltd. were mixed. The moisture content of the resin composition for foam molding calculated by the above method was 15 ppm. It should be noted that the powder of the liquid crystalline aromatic polyester B used was dried at 150°C for 5 hours of longer.

<Example 4>

A standard sample and a foamed molded article of Example 3 were produced in the same manner as in Example 1 except that 97 parts by mass of the powder of the liquid crystalline aromatic polyester A and 3 parts by mass of titanium oxide "PFD-309" manufactured by Ishihara Sangyo Kaisha, Ltd. were mixed. The moisture content of the resin composition for foam molding calculated by the above method was 69 ppm. It should be noted that the powder of the liquid crystalline aromatic polyester A used was dried at 150°C for 5 hours or longer.

<Example 5>

A standard sample and a foamed molded article of Example 5 were produced in the same manner as in Example 1 except that 97 parts by mass of the powder of the liquid crystalline aromatic polyester A and 3 parts by mass of titanium oxide "CR-58" (average particle diameter: 0.28 $\mu$m) manufactured by Ishihara Sangyo Kaisha, Ltd. were mixed. The moisture content of the resin composition for foam molding calculated by the above method was 120 ppm. It should be noted that the powder of the liquid crystalline aromatic polyester A used was dried at 150°C for 5 hours or longer.

<Example 6>

A standard sample and a foamed molded article of Example 6 were produced in the same manner as in Example 1 except that 49.5 parts by mass of the powder of the liquid crystalline aromatic polyester C, 40.5 parts by mass of the powder of the liquid crystalline aromatic polyester D and 10 parts by mass of talc "X-50" (average particle diameter: 22 $\mu$m) manufactured by Nippon Talc Co., Ltd. were mixed. The moisture content of the resin composition for foam molding calculated by the above method was 50 ppm. It should be noted that the powder of the liquid crystalline aromatic polyester C and the powder of the liquid crystalline aromatic polyester D used were dried at 150°C for 5 hours or longer.

<Example 7>

A standard sample and a foamed molded article of Example 7 were produced in the same manner as in Example 1 except that 52.25 parts by mass of the powder of the liquid crystalline aromatic polyester C, 42.75 parts by mass of the powder of the liquid crystalline aromatic polyester D and 5 parts by mass of mica "AB-25S" (volume average particle diameter: 25 $\mu$m) manufactured by Yamaguchi Mica Co., Ltd. were mixed. The moisture content of the resin composition for foam molding calculated by the above method was 75 ppm. It should be noted that the powder of the liquid crystalline aromatic polyester C and the powder of the liquid crystalline aromatic polyester D used were dried at 150°C for 5 hours or longer.

<Example 8>

A standard sample and a foamed molded article of Example 8 were produced in the same manner as in Example 1 except that 49.5 parts by mass of the powder of the liquid crystalline aromatic polyester C and 40.5 parts by mass of the powder of the liquid crystalline aromatic polyester D were mixed. The moisture content of the resin composition for foam molding calculated by the above method was 150 ppm. It should be noted that the powder of the liquid crystalline aromatic polyester C and the powder of the liquid crystalline aromatic polyester D used were dried at 150°C for 5 hours or longer.

<Comparative Example 1>

A standard sample and a foamed molded article of Comparative Example 1 were produced in the same manner as in Example 1 except that 70 parts by mass of the powder of the liquid crystalline aromatic polyester A and 30 parts by mass of a glass filler "CS3J-260S" (number average fiber diameter: 10 $\mu$m) manufactured by Nitto Boseki Co., Ltd. were mixed. It should be noted that the powder of the liquid crystalline aromatic polyester A used was dried at 150°C for 5 hours or longer.

<Comparative Example 2>

A standard sample and a foamed molded article of Comparative Example 2 were produced in the same manner as in Example 1 except that 90 parts by mass of the powder of the liquid crystalline aromatic polyester A and 10 parts by mass of a glass filler "EFH 75-01" (number average fiber diameter: 10 $\mu$m) manufactured by Central Glass Co., Ltd. were mixed. It should be noted that the powder of the liquid crystalline aromatic polyester A used was dried at 150°C for 5 hours or longer.

Table 1 shows the water absorption rate (%) of the inorganic filler used in Examples and Comparative Examples. Further, Table 2 shows the compositions of the resin compositions for foam molding produced in Examples and Comparative Examples and the apparent densities, weight reduction rates, flexural strengths, flexural moduli and elastic modulus retention rates of the obtained foamed molded articles. In addition, FIG. 2 shows a scatter diagram in which the horizontal axis represents the weight reduction rate of the foamed molded article and the vertical axis represents the elastic modulus retention rate of the foamed molded article.

[Table 1]

| Material | Product name | Water absorption rate (%) |
|---|---|---|
| Titanium oxide | CR-60 | 0.14 |
| | PFD-309 | 0.23 |
| | CR-58 | 0.40 |
| Talc | X-50 | 0.05 |
| Mica | AB-25S | 0.15 |
| Glass filler | EFH75-01 | ND |
| | CS3J-260S | ND |

[Table 2]

| | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|---|---|
| Liquid crystalline aromatic polyester | | A | 97 | 97 | - | 97 | 97 | - | - | - | 70 | 90 |
| | | B | - | - | 97 | - | - | - | - | - | - | - |
| | | C | - | - | - | - | - | 49.5 | 52.25 | 49.5 | - | - |
| | | D | - | - | - | - | - | 40.5 | 42.75 | 40.5 | - | - |
| Inorganic filler | Titanium oxide | CR-60 | 3 | - | - | - | - | - | - | - | - | - |
| | | PFD-309 | - | - | - | 3 | - | - | - | - | - | - |
| | | CR-58 | - | - | - | - | 3 | - | - | - | - | - |
| | Talc | X-50 | - | 3 | 3 | - | - | 10 | - | - | - | - |
| | Mica | AB-25S | - | - | - | - | - | - | 5 | 10 | - | - |
| | Glass filler | EFH75-01 | - | - | - | - | - | - | - | - | - | 10 |
| | | CS3J-260S | - | - | - | - | - | - | - | - | 30 | - |
| Apparent density (g/cm³) | | | 0.70 | 0.58 | 0.56 | 0.50 | 0.54 | 0.70 | 0.70 | 0.74 | 1.22 | 0.45 |
| Weight reduction rate (%) | | | 48 | 58 | 60 | 65 | 62 | 51 | 50 | 51 | 23 | 68 |
| Flexural strength (MPa) | | | 68 | 54 | 39 | 50 | 43 | 54 | 41 | 39 | 158 | 28 |
| Flexural modulus (MPa) | | | 4,200 | 3,200 | 2,600 | 3,500 | 3,300 | 3,500 | 2,500 | 4,400 | 9,300 | 4,500 |
| Elastic modulus retention rate (%) | | | 79 | 80 | 81 | 84 | 79 | 85 | 80 | 82 | 68 | 32 |

In the present example, when an inorganic filler having a water absorption rate at room temperature within the

18

range specified by the present invention and a supercritical fluid as a foaming agent were used, a foamed molded article having a high weight reduction rate and excellent mechanical strength was obtained.

From the above results, the usefulness of the present invention was confirmed.

[Industrial Applicability]

The present invention can provide a resin composition for foam molding capable of obtaining a foamed molded article which is lightweight and excellent in mechanical strength, a foamed molded article which is lightweight and excellent in mechanical strength, and a method for producing the aforementioned foamed molded article, and is therefore extremely useful industrially.

[Reference Signs List]

1: Injection molding machine; 11: Main body; 12: Mold; 21: Introduction device; 211: Gas cylinder; 212: Booster; 213: Control valve

**Claims**

1. A resin composition comprising a thermoplastic resin and an inorganic filler,

   wherein said thermoplastic resin is a liquid crystalline aromatic polyester having a repeating unit (1), a repeating unit (2) and a repeating unit (3):

   (1) $\quad$ -O-Ar$^1$-CO-

   (2) $\quad$ -CO-Ar$^2$-CO-

   (3) $\quad$ -X-Ar$^3$-Y-

   (4) $\quad$ -Ar$^4$-Z-Ar$^5$-

   wherein, in the formulas, Ar$^1$ represents a phenylene group, a naphthylene group or a biphenylylene group; Ar$^2$ and Ar$^3$ each independently represent a phenylene group, a naphthylene group, a biphenylylene group or a group represented by the above formula (4); X and Y each independently represent an oxygen atom or an imino group (-NH-); Ar$^4$ and Ar$^5$ each independently represent a phenylene group or a naphthylene group; Z represents an oxygen atom, a sulfur atom, a carbonyl group, a sulfonyl group or an alkylidene group; and hydrogen atoms of Ar$^1$, Ar$^2$ or Ar$^3$ may each independently be substituted with a halogen atom, an alkyl group or an aryl group,
   wherein a water absorption rate of said inorganic filler in atmospheric air at a temperature of 25°C and a relative humidity of 50% is 0.05% by mass or more and 2.0% by mass or less,
   wherein said water absorption rate is a value obtained by a thermogravimetric analysis method for the inorganic filler which is placed under an environment at a temperature of 25°C and a relative humidity of 50% for a period of time which is equal to or longer than the time required for the amount of moisture contained in the inorganic filler to reach equilibrium, and the thermogravimetric analysis is carried out by raising the temperature from 25°C to 600°C at a temperature increase condition of 10°C/min using a thermogravimetric analyzer, and by calculating the water absorption rate based on formula (S2) from the mass ratio of the inorganic filler before and after the temperature increase:

$$\text{Water absorption rate (\%)} =$$

$$\left\{ 1 - \frac{(mass\ of\ inorganic\ filler\ after\ temperature\ increase)}{(mass\ of\ inorganic\ filler\ before\ temperature\ increase)} \right\} \times 100 \quad (S2),$$

   wherein said inorganic filler is at least one selected from the group consisting of titanium oxide, talc and mica, and wherein a content of the thermoplastic resin is 80 parts by mass or more and 99 parts by mass or less, and a content of said inorganic filler is 1 part by mass or more and 20 parts by mass or less, with respect to 100 parts by mass of said resin composition.

2. The resin composition according to Claim 1,
wherein Ar$^1$ is a p-phenylene group or 2,6-naphthylene group, Ar$^2$ is a p-phenylene group, m-phenylene group or a 2,6-naphthylene group, and Ar$^3$ is a p-phenylene group or 4,4'-biphenylylene group.

3. The resin composition according to Claim 1 or 2, wherein the content of the aforementioned repeating unit (1) is from 55 to 72 mol%, the content of the aforementioned repeating unit (2) is from 20 to 24 mol%, the content of the aforementioned repeating unit (3) is from 4 to 22.5 mol%, and the total amount of the aforementioned repeating unit (1), the aforementioned repeating unit (2) and the aforementioned repeating unit (3) does not exceed 100 mol%, with respect to 100 mol% of the total amount of all the repeating units.

4. The resin composition according to any one of Claims 1 to 3, wherein the content of the thermoplastic resin is 90 parts by mass or more and 97 parts by mass or less, and the content of said inorganic filler is 3 parts by mass or more and 10 parts by mass or less, with respect to 100 parts by mass of said resin composition.

5. The resin composition according to any one of Claims 1 to 4, wherein a moisture content in said resin composition for foam molding is 10 ppm or more and 400 ppm or less.

6. A method for producing a foamed molded article, comprising

a step of melt-kneading a mixture including the resin composition according to any one of Claims 1 to 5 and a supercritical fluid, and
a step of foam molding said mixture by lowering at least one of a pressure and a temperature of said melt-kneaded mixture to below a critical point of said supercritical fluid.

7. The method for producing a foamed molded article according to Claim 6, wherein said supercritical fluid is nitrogen.

8. A foamed molded article comprising the resin composition according to any one of Claims 1 to 5 as a molding material,

wherein said foam molded article contains a plurality of foam cells, and
wherein a weight reduction rate of the foamed molded article is 48% or more and 65% or less,

wherein the weight reduction rate is represented by a formula (S 1):

$$\text{weight reduction rate (\%)} = 100 \times (dB - dA) / dB \text{ (S1)}$$

wherein dB represents a true density (g/cm$^3$) of said resin composition for foam molding, and dA represents an apparent density (g/cm$^3$) of said foamed molded article,
wherein the true density is calculated from the mass measured for a standard sample after drying the standard sample at 150°C for 5 hours or more, and the volume obtained from the measured value of the dimension,
the apparent density is calculated from the mass measured for the foamed molded article after drying the foamed molded article at 150°C for 5 hours or more, and the volume obtained from the measured value of the dimension, and
the standard sample is a molded article having a flat plate shape of 250 mm × 360 mm × 3 mm produced by melt molding without foaming pellets composed of the resin composition.

9. Use of a resin composition according to claim 1 for producing a foamed molded article by foam molding using a supercritical fluid as a foaming agent,
wherein the resin composition comprises a thermoplastic resin and an inorganic filler.


**Patentansprüche**

1. Eine Harzzusammensetzung, umfassend ein thermoplastisches Harz und einen anorganischen Füllstoff,

wobei das thermoplastische Harz ein flüssigkristalliner aromatischer Polyester mit einer Wiederholungseinheit (1), einer Wiederholungseinheit (2) und einer Wiederholungseinheit (3) ist:

$$(1) \qquad \text{-O-Ar}^1\text{-CO-}$$

$$(2) \qquad \text{-CO-Ar}^2\text{-CO-}$$

$$(3) \qquad \text{-X-Ar}^3\text{-Y-}$$

$$(4) \qquad \text{-Ar}^4\text{-Z-Ar}^5\text{-}$$

wobei in den Formeln Ar$^1$ eine Phenylengruppe, eine Naphthylengruppe oder eine Biphenylylengruppe darstellt; Ar$^2$ und Ar$^3$ jeweils unabhängig eine Phenylengruppe, eine Naphthylengruppe, eine Biphenylylengruppe oder eine durch die vorstehende Formel (4) dargestellte Gruppe darstellen; X und Y jeweils unabhängig ein Sauerstoffatom oder eine Iminogruppe (-NH-) darstellen; Ar$^4$ und Ar$^5$ jeweils unabhängig eine Phenylengruppe oder eine Naphthylengruppe darstellen; Z ein Sauerstoffatom, ein Schwefelatom, eine Carbonylgruppe, eine Sulfonylgruppe oder eine Alkylidengruppe darstellt; und die Wasserstoffatome von Ar$^1$, Ar$^2$ oder Ar$^3$ jeweils unabhängig durch ein Halogenatom, eine Alkylgruppe oder eine Arylgruppe substituiert sein können,
wobei eine Wasserabsorptionsrate des anorganischen Füllstoffs in atmosphärischer Luft bei einer Temperatur von 25°C und einer relativen Feuchtigkeit von 50 % 0,05 Massen-% oder mehr und 2,0 Massen-% oder weniger beträgt,

wobei die Wasserabsorptionsrate ein Wert ist, der durch ein thermogravimetrisches Analyseverfahren für den anorganischen Füllstoff erhalten wird, der einer Umgebung mit einer Temperatur von 25°C und einer relativen Luftfeuchtigkeit von 50 % für eine Zeitspanne ausgesetzt wird, die gleich oder länger ist als die Zeit, die erforderlich ist, damit die in dem anorganischen Füllstoff enthaltene Feuchtigkeitsmenge ein Gleichgewicht erreicht, und die thermogravimetrische Analyse durch Erhöhen der Temperatur von 25°C auf 600°C bei einer Temperaturerhöhungsbedingung von 10°C/min unter Verwendung eines thermogravimetrischen Analysators und durch Berechnen der Wasserabsorptionsrate auf der Grundlage der Formel (S2) aus dem Massenverhältnis des anorganischen Füllstoffs vor und nach der Temperaturerhöhung durchgeführt wird:

$$\text{Wasserabsorptionsrate (\%)} =$$
$$\left\{ 1 - \frac{(\textit{Masse des anorganischen Füllstoffs nach Temperaturerhöhung})}{(\textit{Masse des anorganischen Füllstoffs vor der Temperaturerhöhung})} \right\} \times 100 \qquad (S2),$$

wobei der anorganische Füllstoff mindestens einer ist, ausgewählt aus der Gruppe bestehend aus Titanoxid, Talk und Glimmer, und

wobei ein Gehalt des thermoplastischen Harzes 80 Massenteile oder mehr und 99 Massenteile oder weniger beträgt und ein Gehalt des anorganischen Füllstoffs 1 Massenteil oder mehr und 20 Massenteile oder weniger beträgt, bezogen auf 100 Massenteile der Harzzusammensetzung.

2. Die Harzzusammensetzung nach Anspruch 1,
wobei Ar$^1$ eine p-Phenylengruppe oder eine 2,6-Naphthylengruppe ist, Ar$^2$ eine p-Phenylengruppe, eine m-Phenylengruppe oder eine 2,6-Naphthylengruppe ist und Ar$^3$ eine p-Phenylengruppe oder eine 4,4'-Biphenylylengruppe ist.

3. Die Harzzusammensetzung nach Anspruch 1 oder 2, wobei der Gehalt der vorstehenden Wiederholungseinheit (1) 55 bis 72 Mol-% beträgt, der Gehalt der vorstehenden Wiederholungseinheit (2) 20 bis 24 Mol-% beträgt, der Gehalt der vorstehenden Wiederholungseinheit (3) 4 bis 22,5 Mol-% beträgt, und die Gesamtmenge der vorstehenden Wiederholungseinheit (1), der vorstehenden Wiederholungseinheit (2) und der vorstehenden Wiederholungseinheit (3) nicht 100 Mol-% übersteigt, bezogen auf 100 Mol-% der Gesamtmenge aller Wiederholungseinheiten.

4. Die Harzzusammensetzung nach einem der Ansprüche 1 bis 3, wobei der Gehalt des thermoplastischen Harzes 90 Massenteile oder mehr und 97 Massenteile oder weniger beträgt, und der Gehalt des anorganischen Füllstoffs 3 Massenteile oder mehr und 10 Massenteile oder weniger beträgt, bezogen auf 100 Massenteile der Harzzusammensetzung.

5. Die Harzzusammensetzung nach einem der Ansprüche 1 bis 4, wobei der Feuchtigkeitsgehalt in der Harzzusammensetzung zum Schaumformen 10 ppm oder mehr und 400 ppm oder weniger beträgt.

**6.** Ein Verfahren zur Herstellung eines Schaumstoff-Formgegenstands, umfassend

einen Schritt des Schmelzknetens eines Gemischs, das die Harzzusammensetzung nach einem der Ansprüche 1 bis 5 und ein überkritisches Fluid enthält, und
einen Schritt des Schaumformens des Gemischs durch Absenken mindestens eines/einer aus einem Druck und einer Temperatur des schmelzgekneteten Gemischs unter einen kritischen Punkt des überkritischen Fluids.

**7.** Das Verfahren zur Herstellung eines Schaumstoff-Formgegenstands nach Anspruch 6, wobei das überkritische Fluid Stickstoff ist.

**8.** Ein Schaumstoff-Formgegenstand, umfassend die Harzzusammensetzung nach einem der Ansprüche 1 bis 5 als Formmaterial,

wobei der Schaumstoff-Formgegenstand mehrere Schaumzellen enthält, und
wobei eine Gewichtsreduktionsrate des Schaumstoff-Formgegenstands 48 % oder mehr und 65 % oder weniger beträgt,
wobei die Gewichtsreduktionsrate durch die Formel (S 1) dargestellt wird:

$$\text{Gewichtsreduktionsrate (\%)} = 100 \times (dB - dA) / dB \text{ (S1)}$$

wobei dB eine wahre Dichte ($g/cm^3$) der Harzzusammensetzung für das Schaumformen darstellt und dA eine Rohdichte ($g/cm^3$) des Schaumstoff-Formgegenstands darstellt, wobei die wahre Dichte aus der Masse, die für eine Standardprobe nach dem Trocknen der Standardprobe bei 150°C für 5 Stunden oder länger gemessen wird, und dem Volumen, das aus dem gemessenen Wert der Abmessung erhalten wird, berechnet wird, die Rohdichte aus der für den Schaumstoff-Formgegenstand gemessenen Masse nach dem Trocknen des Schaumstoff-Formgegenstands bei 150°C für 5 Stunden oder länger und dem Volumen, erhalten aus dem gemessenen Wert der Abmessung, berechnet wird, und die Standardprobe ein Formgegenstand mit einer flachen Plattenform von 250 mm × 360 mm × 3 mm ist, der durch Schmelzformen von Pellets aus der Harzzusammensetzung ohne Schäumen hergestellt wird.

**9.** Die Verwendung einer Harzzusammensetzung nach Anspruch 1 zum Herstellen eines Schaumstoff-Formgegenstands durch Schaumformen unter Verwendung eines überkritischen Fluids als Schäumungsmittel, wobei die Harzzusammensetzung ein thermoplastisches Harz und einen anorganischen Füllstoff umfasst.

**Revendications**

**1.** Composition de résine comprenant une résine thermoplastique et une charge inorganique, laquelle résine thermoplastique est un polyester aromatique cristal liquide ayant un motif répétitif (1), un motif répétitif (2) et un motif répétitif (3):

(1)

-O-Ar[1]-CO-

(2)

-CO-Ar[2]-CO-

(3)

-X-Ar[3]-Y-

(4) -Ar[4]-Z-Ar[5]-
dans laquelle, dans les formules, Ar[1] représente un group phénylène, un groupe naphtylène ou un groupe biphénylyène; chacun de Ar[2] et Ar[3] représente indépendamment un groupe phénylène, un groupe naphtylène, un groupe biphénylylène ou un groupe représenté par la formule (4) ci-dessus; chacun de X et Y représente indépendamment un atome d'oxygène ou un groupe imino(-NH-); chacun de $Ar^4$ et $Ar^5$ représente indépendamment un groupe phénylène ou un groupe naphtylène; Z représente un atome d'oxygène, un atome de soufre, un groupe carbonyle, un groupe sulfonyle ou un groupe alkylidène; et chacun des atomes d'hydrogène de $Ar^1$, $Ar^2$ ou $Ar^3$ peut indépendamment être remplacé par un atome d'halogène, un groupe alkyle ou un groupe aryle,

dans laquelle le taux d'absorption d'eau de ladite charge inorganique dans l'air atmosphérique à une température de 25 °C et sous une humidité relative de 50% est de 0,05% en masse ou plus et 2,0% en masse ou moins, dans laquelle ledit taux d'absorption d'eau est une valeur obtenue par une méthode d'analyse thermogravimétrique pour la charge inorganique qui est placée dans un environnement à une température de 25 °C et sous une humidité relative de 50% pendant une période de temps qui est égale ou supérieure au temps nécessaire pour que la quantité d'humidité contenue dans la charge inorganique atteigne atteigne l'équilibre, et l'analyse thermogravimétrique est effectuée par élévation de la température de 25 °C à 600 °C dans des conditions de montée en température de 10 °C/min, utilisant un analyseur thermogravimétrique, et par calcul du taux d'absorption d'eau sur la base de la formule (S2) à partir du rapport en masse de la charge inorganique avant et aprés la montée en température:

$$\text{taux d'absorption d'eau (\%)} = \left\{1 - \frac{(\text{masse de charge inorganique après montée en température})}{(\text{masse de charge inorganique avant montée en température})} \times 100 \right. \quad (S2)$$

dans laquelle ladite charge inorganique est au moins l'un choisi dans l'ensemble constitué par l'oxyde de titane, le talc et le mica, et dans laquelle la teneur en la résine thermoplastique est de 80 parties en masse ou plus et 99 parties en masse ou moins, et la teneur en ladite charge inorganique est de 1 partie en masse ou plus et 20 parties en masse ou moins pour 100 parties en masse de ladite composition de résine.

2. Composition de résine selon la revendication 1, dans laquelle $Ar^1$ est un groupe p-phénylène ou un groupe 2,6-naphtylène, $Ar^2$ est un groupe p-phénylène, un groupe m-phénylène ou un groupe 2,6-naphtylène, et $Ar^3$ est un groupe p-phénylène ou un groupe 4,4'-biphénylylène.

3. Composition de résine selon la revendication 1 ou 2, dans laquelle la teneur en le motif répétitif (1) susmentionné est de 55 à 72 % en moles, la teneur en le motif répétitif (2) susmentionné est de 20 à 24 % en moles, la teneur en le motif répétitif (3) susmentionné est de 4 à 22,5 % en moles, et la teneur totale en le motif répétitif (1) susmentionné, la teneur totale en le motif répétitif (2) susmentionné et la teneur totale en le motif répétitif (3) susmentionné ne dépasse pas 100 % en moles, pour 100 % en moles de la teneur totale de tous les motifs répétitifs.

4. Composition de résine selon l'une quelconque des revendications 1 à 3, dans laquelle la teneur en la résine thermoplastique est de 90 parties en masse ou plus et 97 parties en masse ou moins, et la teneur en ladite charge inorganique est de 3 parties en masse ou plus et 10 parties en masse ou moins, pour 100 parties en masse de ladite composition de résine.

5. Composition de résine selon l'une quelconque des revendications 1 à 4, dans laquelle la teneur en humidité de ladite composition de résine pour moulage de mousse est de 10 ppm ou plus et 400 ppm ou moins.

6. Méthode pour produire un article moulé expansé, la méthode comprenant

une étape de malaxage à l'état fondu d'un mélange contenant la composition de résine selon l'une quelconque des revendications 1 à 5 et un fluide supercritique, et une étape de moulage en mousse dudit mélange par abaissement d'au moins l'une parmi la pression et la température dudit mélange malaxé à l'état fondu en-deçà d'un point critique dudit fluide supercritique.

7. Méthode pour produire un article moulé expansé selon la revendication 6, dans lequel le fluide supercritique est l'azote.

EP 3 543 284 B1

8. Article moulé expansé comprenant la composition de résine selon l'une quelconque des revendications 1 à 5 en tant que matériau de moulage,

lequel article moulé expansé contient une pluralité d'alvéoles de mousse, et
dans lequel le taux de réduction de poids de l'article moulé expansé est de 48 % ou plus et 65 % ou moins,
dans lequel le taux de réduction de poids est représenté par la formule (S1) :

$$\text{taux de réduction de poids } (\%) = 100 \times (dB - dA) / dB \ (S1)$$

dans laquelle dB représente la masse volumique réelle (g/cm$^3$) de ladite composition de polymère cristal liquide pour moulage de mousse, et dA représente la masse volumique apparente (g/cm$^3$) dudit article moulé expansé,
dans laquelle la masse volumique réelle est calculée à partir de la masse mesurée pour un échantillon de référence après séchage de l'échantillon de référence à 150 °C pendant 5 heures ou plus, et du volume obtenu à partir de la valeur mesurée des dimensions,
dans laquelle la masse volumique apparente est calculée à partir de la masse mesurée pour l'article moulé expansé après séchage de l'article moulé expansé à 150 °C pendant 5 heures ou plus, et du volume obtenu à partir de la valeur mesurée des dimensions, et
l'échantillon de référence est un article moulé ayant une forme de plaque plate de 250 mm × 360 mm × 3 mm produit par moulage à l'état fondu sans expansion de pastilles composées de la composition de résine.

9. Utilisation d'une composition de résine selon la revendication 1 pour produire un article moulé expansé par moulage en mousse utilisant un fluide supercritique en tant qu'agent moussant,
dans laquelle la composition de résine comprend une résine thermoplastique et une charge inorganique.

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016225037 A
- JP 10175249 A
- JP 2002168279 A
- JP 2004269583 A
- JP 2013185044 A

**Non-patent literature cited in the description**

- Liquid Crystalline Polymer - Synthesis, Molding, and Application. CMC Publishing Co., Ltd, 05 June 1987, 95-105